# EUROPEAN PATENT SPECIFICATION

(11) **EP 0 669 031 B1**
(45) Date of publication and mention of the grant of the patent: **22.10.1997**
(21) Application number: 93924638.5
(22) Date of filing: 11.11.1993
(51) Int. Cl.: G07F 7/08, H04Q 7/20, H04M 3/42

(54) **METHOD FOR CARRYING OUT FINANCIAL TRANSACTIONS BY MEANS OF A MOBILE TELEPHONE SYSTEM**
VERFAHREN ZUM DURCHFÜHREN VON FINANZIELLEN TRANSAKTIONEN MITTELS EINES MOBILEN TELEPHONSYSTEMS
PROCEDE D'EXECUTION DE TRANSACTIONS FINANCIERES AU MOYEN D'UN SYSTEME TELEPHONIQUE MOBILE

(30) Priority: 11.11.1992 FI 925135; 11.11.1993 FI 934995
(43) Date of publication of application: 30.08.1995
(73) Proprietor: TELECOM FINLAND OY, 00511 Helsinki (FI)
(72) Inventor: Vatanen, Harri Tapani, SF-00660 Helsinki (FI)
(74) Representative: Hermansson, Birgitta
(86) International application number: PCT/FI93/00474
(87) International publication number: WO 94/11849

(56) References cited:
- EP-A- 0 225 010
- EP-A- 0 440 515
- EP-A- 0 481 714
- WO-A-92/19078
- US-A- 4 965 821
- US-A- 5 144 649

## Description

The object of the invention is a method for utilizing card operated mobile stations, especially utilizing the service card of the GSM-network SIM-card containing the SIM-unit, favorably in different electronic service systems demanding high data protection.

In present card systems the telecommunication networks are utilized either in on-line or off-line communication of transactions. Considerable problems are the development and maintenance costs of the card systems and the telecommunication fixed costs as well as the variable costs of the communication for the service providers, e.g. shops and banks, etc. In the present card systems the telecommunication traffic and subscriber fees are paid by the service providers (the shop, restaurant, taxi, hotel, etc.), because the division of the telecommunication costs otherwise would demand the construction of expensive or for the use of the customers clumsy solutions.

A vital problem is the prevention of unlawful and criminal use of electronic service systems. Such situations occur when the card falls into wrong hands or when the card is used for unauthorized services (the card lacks cover or the card limit has been overdrawn). A considerable challenge comes from preventing the forgery of service cards and electronic service sessions. The problem is e.g. forgery of the A-number identity in the public network service applications, where the A-number is used to check the access rights to the service, by which a forged A-number identity enables the criminal use of the service in question.

A considerable problem arises also from the management of the access rights of different services associated to the same service card. At present expensive technical arrangements are provided separately for every service provider in order to administrate the different services associated to the card.

Moreover, the problem of the present card systems is the transfer of the transaction data in connection with the card transaction to the different parties, e.g. in a trade situation the transfer of the purchase and the card payment to the central system of the shop from a single site, to the payer's bank, the payee's bank, etc. Different banks and credit companies have their own security systems.

The existing telephone banks with different numbers provide voice-frequency telephones for the payment of bills and statement of account inquiries. When e.g. a telebank is called, the computer identifying the DTMF-voice frequency signals available through the telephone network i.e. the central voice applications platform (the CVAP) answers and the caller talks with the CVAP by pushing certain keys suggested by a predetermined program.

By linking a card reader system to the phone, the calls can be paid by credit card. The U.S. patent publication 5 144 649 describes the method of using the radio telephone with a credit card. The phone can be used only by first presenting the credit card. The credit card data is read from the credit card and the local validity of the credit card is established by processing the credit card data. If the validity is approved, the phone can be used. When the client uses the phone to place or receive a call, the time for using the phone is recorded. The validity can be checked during the call, and if the call charge exceeds the credit limit, the method can cut off the call.

The published EP application 409 417 also describes the charging of calls when using a certain service data terminal having a credit card reader. In the credit card phone method, a local database, a storage and a programming intelligence have been connected to the telephone to enable the processing of the calls, in which method the user enters the credit card number after having dialled the required number, the data is locally recorded after having checked the authority of the card, and in affirmative case, immediately continues the call set-up. The line is supervised during the call. The card number, the dialled number, the date, time and call time are locally recorded. The host computer is updated with this information. In the methods above only calls are charged by the credit cards.

The publications EP-A-0481714 and WO-A-92/19078 relate to mobile telephone systems, especially to mobile telephone system of the Global System for Mobile Communications i.e. GSM type standardised by the European telecommunications organisation called ETSI, where the user's identity is controlled by using a Personal Identity Number- i.e. PIN-code in connection with a smart- or intelligence-card type subscriber identifier, such as the Subscriber Identity Module- i.e. SIM. The publication EP-A-0481714 relates to identifying subscribers in cellular telephone network. According to the publication the subscribers each have a token, such as a smartcard, by means of which they respectively identify themselves to the network. Each subscriber logs into the network by using his smartcard which inputs in the GSM network a unique identity known as the Mobile Subscriber Identity i.e. IMSI. The relationship between each IMSI and the corresponding subscriber's telephone number, known as the mobile subscriber international ISDN number i.e. MSISDN, is random and stored in a Home Location Register i.e. the HLR. When a subscriber activates a mobile terminal using his smartcard, a Visitor Location Register i.e. the VLR at the relevant cell checks for presence of the IMSI and the corresponding MSISDN. If they are not present, it extracts them from the HLR. When a replacement smartcard is issued to a subscriber, the new IMSI is stored in the HLR in association with the IMSI of the previous smartcard. When the replacement smartcard is first used, the relevant VLR will note its absence and follow the same routine as specified above by accessing the HLR. This will also activate the HLR to note first use of the replacement smartcard, cancel all reference to the IMSI of the previous smartcard, and inform the administration centre of the network. Advantage is that the network can recognise use of replacement smartcard, allowing its immediate use. The publication WO-A-92/19078 relates also especially to a mobile telephone system of the GSM type. According to the publication a user's identifier means, such as the Subscriber Identity Module i.e. SIM of smartcard type, is allocated at least two identities known for the GSM type mobile telephone system as the International Mobile Subscriber Identity i.e. IMSI, which are selectively useable such that the user activates the desired IMSI when using a subscriber unit i.e. the mobile telecommunication terminal. More precisely the selection is disclosed to be provided such that the user inserts the SIM in the subscriber terminal in a first position for activating one IMSI and the other IMSI is activated by inserting the SIM in the subscriber terminal in a second position, whereby each identity is activated in connection with the input of a PIN-code. Advantage of the system is that the subscriber can allocate under different IMSI:s different type of calls.

The publication EP-A-0225010 relates to the use of a mobile terminal such that a user can communicate in a secure way with a second party, such as a bank, in order to transact business, and for verifying the user a PIN-code is used. According to the publication a mobile terminal includes a device capable of reading data stored in a card type subscriber identifier such as a smart- or intelligence-card i.e. a SIM-card, a device for entry by the user of the SIM-card and a device for encrypting the PIN-code prior to transmission to a checking entity. The PIN-code is encrypted by means of a selected key, that key being transmitted, after encryption using a public key corresp. to a secret key held by the checking entity, along with the encrypted PIN-code. The selected key may be a conventional key or a second secret key corresp. to a second public key. Multiple encryptions of the selected key may be performed. The terminal may also send a cryptographic check sum to the checking entity based either on the selected key or a secret key.

The methods according to the subject invention provide a preferable solution to the above mentioned problems. The invention is characterized in what is presented in the claims. The solution according to the invention requires the initialization of the service card SIM-unit always to require the use of the PIN-code, the connection of service number applications demanding high data security from the GSM-network base station onwards through a private network all the way to the service provider (e.g. the bank credit system), searching with the A-number identity in the service application from the service database the database required by the user, to which the user has a predetermined right according to the database register, the description of the A-number identity related services to the service database, in which e.g. the customer's account number corresponds to the A- and B-number identities, and, furthermore, for the service management a service center for the control of the access rights of the A- and B-number related services and the re-connection of the services.

Vital advantages of the subject invention are the possibilities to utilize the Pan-European GSM-system SIM-card or a card of a corresponding system in and for the different card issuers' applications, the possibilities to reduce and divide the service and equipment related telecommunication costs, due to i.a. joint usage of different service providers. The invention solves the question of utilizing reliably the GSM-network user's local authentication all the way to the service provider. The invention also provides a solution to the charging of the card system telecommunication transaction costs direct from the user or from third party, which is a direct benefit for the service supplier of the use of the GSM-network and the SIM-unit in the card system. The invention has resolved the question of substantially obstructing unlawful and criminal use of telecommunication services, and furthermore the safe processing of the A-number identity in service applications.

Payment transactions can be secured on-line, by which the use of stolen and forged cards can be prevented immediately when the computer in question has been informed. The transaction data is simultaneously transferred to the payer and the buyer. The same data terminal equipment can be used also as a mobile phone by installing a mobile communication network service card. Payments can thus take place on the whole network area.

Different services can be associated to the GSM-card customer number defined in the SIM-unit (Subscriber Identity Module). The telecommunication costs related to the use of the services can directly be charged the customer defined by the card. The card related services are described either in the network to the customer's service database i.e. the AUP (A-user profile), from which the data is searched with the caller's ANI (A-number identity) or to the service card containing the SIM-unit.

Due to the authentication taking place in the local or the mobile telephone network, the GSM-card is adapted for different transactions demanding high data security, which require authentication of the user. The most important applications are i.a. the banking service cards, such as credit and cash cards, insurance cards, regular customer cards, hotel cards, passenger traffic cards, etc.

The invention provides a solution to the reliable utilization of the local authentication of the user of the GSM- or mobile telephone system of the Global System for Mobile Communications i.e. GSM type standardised by the European telecommunications organisation called ETSI, reference is made to the corresp. ETSI specification GSM 01.05 and the corresponding technical reports ref. 01.05 for GSM, where the references to other specifications both definitions and abbreviations like SIM (Subscriber Identity Module), PIN (Personal Identity Number)-code, IMSI (International Mobile Subscriber Identity), ANI or A-ID(A-Number Identity) relating to the GSM-system are declared. In the following the definitions and abbreviations are correspondingly used, however, notable is that also e.g. mobile telecommunication networks such as the European DCS (Digital Cellular telecommunications System) for 1800 MHz based on the GSM-specifications, DECT (Digital European Cordless Telecommunications) developed and standardised by the ETSI as well as the American PCS-networks among other cellular phone networks where card-controlled mobile terminals are used, are suitable technical platforms for the present invention.

The invention provides a solution to the safe management of different services associated with the same service card and/or A-number identity.

By the network is meant a combination of transmission routes and nodes between two or several users of the tele-or data communication connections.

The invention is presented below more in detail with reference to the enclosed drawing.
- Fig. 1: presents the present system for paying bills;
- Fig. 2: presents a simple system of the subject invention;
- Fig. 3: presents the system between the data terminal equipment and the central computer system.

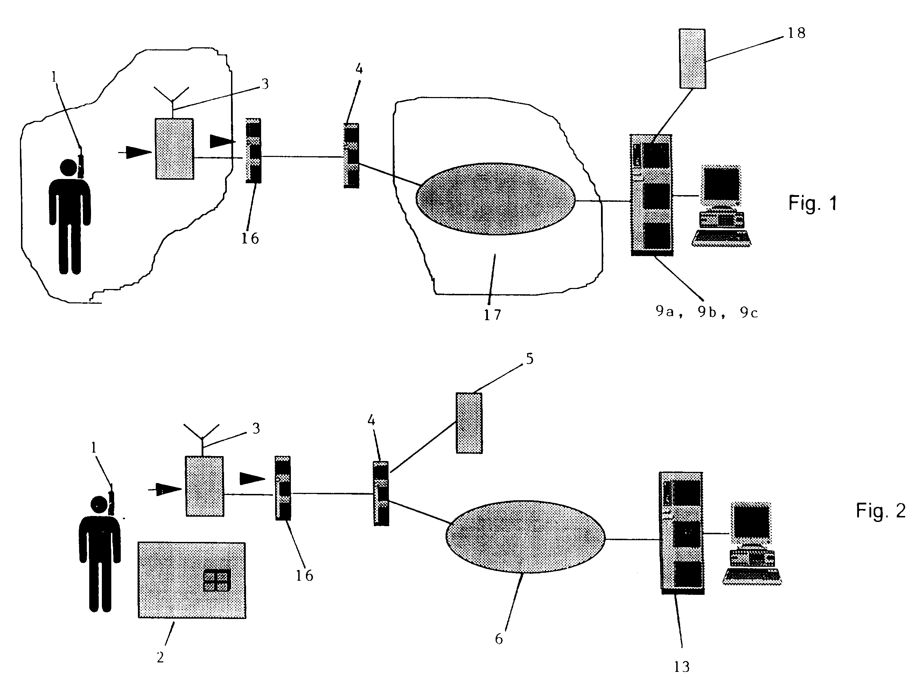

Fig. 1 presents a known system for paying bills or inquiring account information by phone. No A-number identity authentication takes place. The telephone connection goes via the public telephone network 17, which does not enable a reliable A-number identity authentication in the application. The PIN-code application 18 is required to secure the customer identification in the application. The phone can in principle be used by anyone. The A- number identity cannot reliably be used in applications demanding high data security to identify the user, e.g. payments, if the connection is permitted without the use of the PIN-code of the service card 2, as in such a case anyone could unlawfully use the service. The application 18 must be installed to ask for the user code and the password.

Fig. 2 presents a mobile telephone system according to the invention, in which the audio- and/or data connection is taken from the terminal equipment 1 to the network 13 of the desired service provider. The service card's SIM-unit has been initialized always to demand e.g. a four-number PIN-code before setting up the connection. In applications demanding high data security the connection from the mobile telephone exchange 4 to the application is coupled via the dedicated network 6 and to the application is communicated the caller's A-number identity used to administrate the user's rights and to connect the user to the service. With the intelligence part of the service card 2 installed in the terminal equipment of the system, the user of the equipment is locally authenticated in point 5, connection is taken via the dedicated network 6 to the service provider 13, with the help of the identifier the service provider identifies the rights of the service user to use the services.

The system comprises a terminal equipment 1, which is in connection via the telephone network with the service provider's central computer containing the payment system. The object of the invention is a payment system, comprising a mobile telephone network's terminal equipment 1, to which can be connected the subscriber identification unit 2 containing data for subscriber identification and radio traffic secrecy, and which is readable to the terminal equipment for the use of card operated mobile stations, e.g. a SIM-card in a GSM-system. The mobile stations 1 are in connection with the mobile network transmitter-receiver station i.e. base station 3. The base station controller 16 controls the operations of one or several base stations 3. From the controller or the base station there are connections with the mobile telephone exchange 4, from where there are connections to the telecommunication networks 6. According to the invention, calls to a predetermined number are directed to the dedicated network 6 in the mobile telephone exchange. In the call set-up, the subscriber is identified in the authentication center 5 and the subscriber is given the right to the call. The authentication center contains in i.a. the GSM-system the mobile subscribers' secret identification keys and this is utilized i.a. in securing the data protection to prevent misuse of the mobile subscriptions and to maintain the radio traffic secrecy. The network can be a public telephone network, as is well known, but according to the invention in applications demanding high data security, a dedicated network 6. Information about e.g. the amount to be paid as well as data required to identify the A- and B-subscribers are transferred in the phone calls.

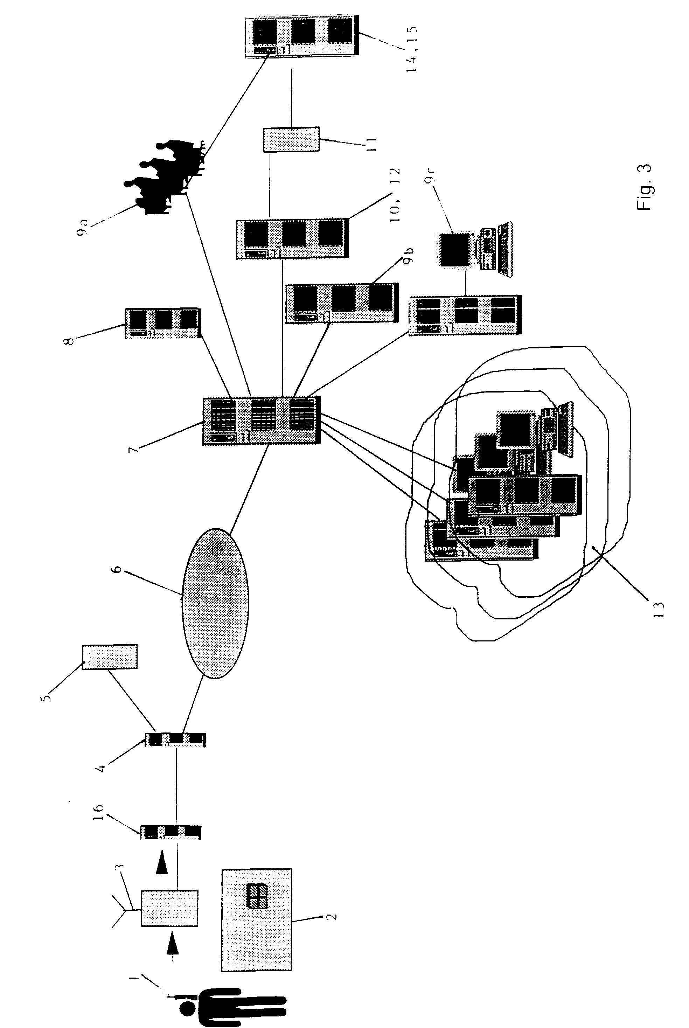

To build up the connections, the system presented in Fig. 3 comprises the service connecting point 7, to which has been linked a service control point 8, containing the data about the services available to the subscriber. The control and management devices are essential for the access to the services of the service provider, e.g. in audio-applications a person-aided 9a, e.g. a call-management program intended for operator use in a CallCoordinator 2 operating in local area network PC- or minicomputer environment, or an automatic telephone service system 9b, e.g. a Periphonics VPS or IBM DirectTalk/6000 or some other micro- or minicomputer intended for voice processing, and in data applications a telematic service system 9c, with connections via the service connection point 7 to the services of the service provider.

In the voice-applications the telephone service system comprises a PABX 10, e.g. Meridian, an data adapter 11 linked to the PABX, e.g. Meridian Link for switching of the A- and B-numbers to the talk- and data session, an automatic talk control system 12, e.g. Meridian ACD, a possible PABX network 13, e.g. Meridian, a host computer 14, e.g. host-machine IBM or Tandem, a service application to be run in the host computer 15.

The data terminal equipment can be at e.g. the store pay-desk, where the customers puts his own pay (service) card in the terminal, i.e. the GSM-telephone's card reading device. In the method the charging of the transactions of the card holder is based on the SIM-card and the GSM-network standard, according to which the SIM-card in the GSM-terminal card reader reserves the equipment based on the SIM-card user data. The GSM-terminal is visible to the network-operator as a personal transaction of the card holder. The payer enters his card identification number into the terminal. After having approved the identification number given by the payer, the GSM-network terminal is switched to the GSM-network, if permitted by the system. The payer selects the transmitter of the transaction, e.g. a bank, a credit company, based on which a call is placed to the transmitter's payment system. When the connection is set up via the dedicated network 6, the system of the transmitter's payment system asks for the amount to be paid and requests the payer to confirm the amount. After having approved the transaction, the payment system returns the identification number. The payment terminal utilizing the GSM-network produces a receipt to the customer for the transaction and records the transaction in the cash register.

In the system the same call gets in connection with the payment system of the payee for a simultaneous securing of the usability of the card, and with the network operator to charge for the use of the phone.

The system also enables the offering of free services via the network, because the payer of every transaction in the GSM-connection can be defined so that the payee or another party is charged if utilizing in the GSM-network the payees free service number, a collect call or alike.

Generally a computer system is built around the GSM-terminal, which system contains the local database, the storage and the programming intelligence providing the peripheral devices required for the invoicing and cash registering. The identification of the card issuer i.e. the service provider, e.g. the store, bank, etc. can be made in the SIM-card blank. The SIM-card can, if required, be furnished with a magnetic stripe and card embossing. The SIM-card or a corresponding micro-chip can be programmed and altered so that when putting the card into the data terminal equipment it automatically calls the transaction processing system of the service provider, e.g. the central payment transmission system.

Due to the high data security demands in banking and payment applications, the banking and payment application connections taken from the GSM-network are connected from the mobile telephone exchange MSC 4 to the dedicated network 6. The dedicated network 6 consists e.g. of N*2Mbps connections. The use of the dedicated network 6 aims at preventing unlawful use of the services, which at present is possible when using the public telephone network.

In the banking services, the bank customer places the bank service card containing the SIM-unit in the GSM-network terminal. In telephone based banking services the terminal can be a standard GSM-telephone. In databased banking services the terminal can be a microcomputer and a banking service program linked to the GSM-telephone. Thus a sufficient storage and programming intelligence for the data processing and transmission is contained in the data terminal itself or linked to it, as is well known. To the terminal, e.g. Motorola MicroTac-phone serial port can be linked a microcomputer (data processing device) and/or a display, keyboard and means to control these.

The banking services are handled by calling the bank related service numbers, the B-number, based on which is searched from the service database linked to the customer's A-number i.e. the customer's service profile (AUP= A user profile) the customer's account number/(s) and information about available banking services. From the accounts linked to the customer's AUP, means can be transferred to other accounts, bills can be paid, or bills contained in the bill basket linked to the AUP can be approved or rejected. The bill basket is a system to which the invoicing parties deliver their invoicing material, from which the payers can approve or reject payments addressed to them.

In the banking service application the customer feeds his card into a device contained in the GSM-network terminal. The customer enters his PIN-code. The GSM-network terminal makes a local PIN-code checking according to the GSM-standard. If the PIN-code is correct, the customer can get in connection with the bank. In case the PIN-code is incorrect, the customer can try again a limited amount of times according to the GSM-network's SIM-standard. The SIM-unit has been initialized for banking and payment applications in a state that always demands the PIN-code. When the amount of consecutive faulty entries permitted by the PIN-code is exceeded, the card is locked and its re-opening requires a so called PUG-code which is longer than the PIN-code. When the entry is correct, the customer selects the banking service number. Based on the customer's A-number the services available to the customer are searched from the customer's database. The customer attends to his banking affairs by phone or by the home computer and thereafter cuts off the connection.

When paying by pay card, the payer's card is fed into the payment data terminal and the shopkeeper (cashier) enters the code of the payment transmitter selected by the payer (bank, credit company, etc.) and the amount to be paid. The payer enters his PIN-code. As described above, checking is done, whereafter based on the customer's A-number the account (bank account, credit account, or alike) to be charged is searched from the data base maintained by the teleoperator or the payment transmitter. After having approved the transaction, the payment system sends to the seller a consecutive approval number for the registration of the transaction and for the producing of the receipt.

The approved transaction is credited to shopkeeper's account with the amount paid. In case there is not a sufficient cover in the account or if the transaction for some other reason cannot be approved, the payment system sends a rejection message.

The payment data terminal contains i.a. a display, a keyboard, a receipt printer, a possible link to the cashier system, a reader etc. as well as the above mentioned SIM-card reader and the GSM-network terminal equipment.

The Mega Service Center operates as the service card system maintenance center, in which different service providers' services related to the service cards and/or A-number identity are administrated, and in which the customers with the help of their A-number identity can change their service profiles (AUP) and easily and safely handle different transactions. The Mega Service Center is a person aided 9a or an automatic telephone 9b or a telematic 9c system (computer supported data service system), from which the customer's telecommunication connection is transmitted to the services available to the customer.

The invention has above been described with reference to one of its favorable forms of application. The invention is not to be considered as so limited, but all modifications within the scope of the inventive idea defined by the claims are naturally applicable.

## Claims

1. A method for using telecommunication services and carrying out financial transactions by a mobile telephone system including at least one mobile telephone exchange for coupling connections in, from and to the mobile telephone system, in which method an audio and/or data connection is taken from a data terminal equipment (1) of the mobile telephone system to a desired service provider (13), and in which method preceding the connection to the service provider a user of the system is authenticated in an authentication center (5) of the mobile telephone system by means of a personal identity code and data from an intelligence part of a service card (2) contained in the system's terminal equipment, **characterised** in, that after the user is locally authenticated to verify his rights to use the service of the desired service provider (13) the connection is established from the mobile telephone exchange via a dedicated network (6) to the service provider.

2. A method according to the claim 1, **characterised** in, that as the mobile telephone system is used a Global System for Mobile Communications, abbr. GSM, type mobile telephone system or a corresponding system with service card controlled mobile terminals, and that the service card contains a Subscriber Identity Module, abbr. SIM, unit for the GSM network, which has in authentication applications been initialised to demand an entering of the user's identification by a Personal Identity Number, abbr. PIN, of the service card.

3. A method according to the claim 1 or 2, **characterised** in, that in banking, payment and other applications requiring high data security, the audio or data connections taken in the GSM network are transmitted from the mobile telephone exchange (4) to the dedicated network (6) to prevent misuse.

4. A method according to any of the above claims, **characterised** in, that in the said the connections established from the mobile telephone exchange (4) via the dedicated network (6) to the service (13) that after the said local user authentication the user's A-number, i.e. Subscription number of the calling subscription, identity is utilised to check the user's rights to use the service.

5. A method according to any of the above claims, **characterised** in, that in the mobile telephone exchange a call to a predetermined number is transmitted to the dedicated network (6) according to the register contained in the mobile telephone exchange.

6. A method according to any of the above claims, **characterised** in, that from a private network there is provided a connection via a service switching point and a service control point to several of the user services, which are registered e.g. in a service database administrated by an operator to transmit the user to the desired services.

7. A method to pay by a terminal equipment of a mobile telephone exchange of a mobile telephone network, the said terminal equipment having a telephone/pay card linked to it enabling user's calls, connections to the mobile telephone network are provided, via which there is an access to a service provider's services, **characterised** in reserving the equipment based on user data contained in a (Subscriber Identity Module, abbr. SIM, card by putting the SIM card in the Global System for Mobile Communications, abbr. GSM, terminal equipment's card reader, entering a card identification number into terminal equipment, connecting the terminal equipment to the GSM network after having approved the identification number given by the user, selecting a transaction transmitter, the service provider, calling a transmitter's, such as a mobile telephone network operator, payment system, forming a connection with the transmitter's payment system, giving an amount to be paid, confirming the amount, approving a payment, giving the payment an identification number, producing a receipt of the transaction to the user, recording the transaction in the service provider's, such as a seller, terminal and in the payment system, charging telephone connection time, and cutting off connection.

8. A method according to the claim 7, **characterised** in checking the card user's right of use in the service provider's terminal, such as a computer, and checking in affirmative case the amount to be paid by the card, and if appropriate acknowledging the receipt of the payment.

9. A method according to the claim 7 or 8, **characterised** in that an A-number, i.e. an subscription number of the calling subscription, identity corresponds to an account number.

## Patentansprüche

1. Verfahren zum Benutzen von Fernmeldediensten und zum Durchführen finanzieller Transaktionen über ein Mobiltelefonsystem, welches mindestens eine Mobiltelefon-Vermittlungsstelle aufweist, um Verbindungen innerhalb, von und zu dem Mobiltelefonsystem zu schalten, bei welchem Verfahren eine Audio- und/oder Datenverbindung von einer Datenendeinrichtung (1) des Mobiltelefonsystems zu einem gewünschten Diensteanbieter (13) hergenommen wird, und bei welchem Verfahren vor der Verbindung zu dem Diensteanbieter ein Benutzer des Systems in einem Autorisierungszentrum (5) des Mobiltelefonsystems mittels eines persönlichen Identitätscodes sowie Daten von einem intelligenten Teil einer Dienstkarte (2), die in der System-Endeinrichtung enthalten ist, autorisiert wird, **dadurch gekennzeichnet,** daß, nachdem der Benutzer lokal autorisiert ist, um sein Recht auf die Benutzung des Dienstes des gewünschten Diensteanbieters (13) zu verifizieren, die Verbindung von der Mobiltelefon-Vermittlungsstelle über ein eigenständiges Netzwerk (6) zu dem Diensteanbieter eingerichtet wird.

2. Verfahren nach Anspruch 1,
**dadurch gekennzeichnet,** daß als Mobiltelefonsystem ein Mobiltelefonsystem vom Typ des globalen Mobilkommunikationssystems, abgekürzt GSM, oder ein entsprechendes System mit über Dienstkarte gesteuerten mobilen Endeinrichtungen verwendet wird, und daß die Dienstkarte ein Teilnehmer-Kennungsmodul, abgekürzt SIM-Einheit, für das GSM-Netzwerk enthält, welches bei Autorisierungsvorgängen zur Aufforderung zu einer Eingabe der Benutzeridentifikation mittels einer persönlichen Identifizierungsnummer (abgekürzt PIN) der Dienstkarte initialisiert worden ist.

3. Verfahren nach Anspruch 1 oder 2,
**dadurch gekennzeichnet,** daß bei Bank-, Zahlungs- und anderen Geschäften, die eine hohe Datensicherheit erfordern, die Audiooder Datenverbindungen, die in dem GSM-Netzwerk hergenommen werden, zur Vermeidung von Mißbrauch von der Mobiltelefon-Vermittlungsstelle (4) an das eigenständige Netzwerk (6) übertragen werden.

4. Verfahren nach einem der obigen Ansprüche,
**dadurch gekennzeichnet,** daß nach dem Einrichten der Verbindungen von der Mobiltelefon-Vermittlungsstelle (4) über das eigenständige Netzwerk (6) zu dem Diensteanbieter (13), nach der lokalen Autorisierung des Benutzers die A-Zahl, d.i. die Teilnehmernummer des rufenden Teilnehmers, dazu benutzt wird, die Rechte des Benutzers auf Inanspruchnahme des Dienstes zu überprüfen.

5. Verfahren nach einem der obigen Ansprüche,
**dadurch gekennzeichnet,** daß in der Mobiltelefon-Vermittlungsstelle ein Ruf zu einer vorbestimmten Nummer nach Maßgabe des in der Mobiltelefon-Vermittlungsstelle enthaltenen Registers zu dem eigenständigen Netzwerk (6) übertragen wird.

6. Verfahren nach einem der obigen Ansprüche,
**dadurch gekennzeichnet,** daß von einem privaten Netzwerk eine Verbindung über einen Dienst-Schaltpunkt und einen Dienst-Steuerpunkt eine Verbindung zu mehreren Benutzerdiensten vorgesehen ist, die zum Beispiel in einer Dienst-Datenbank registriert sind, welche von einem Operator betrieben wird, um den Benutzer mit den gewünschten Diensten zu verbinden.

7. Verfahren zum Zahlen mit Hilfe einer Endeinrichtung einer Mobiltelefon-Vermittlungsstelle eines Mobiltelefonnetzwerks, wobei mit der Endeinrichtung eine Telefon-/Zahl-Karte zum Ermöglichen von Benutzeranrufen gekoppelt ist, wobei Verbindungen zu dem Mobiltelefonnetzwerk vorhanden sind, über die ein Zugriff zu den Diensten eines Diensteanbieters möglich ist,
**dadurch gekennzeichnet,** daß die Einrichtung basierend auf Benutzerdaten reserviert wird, welche in einer Teilnehmer-Kennungsmodul-, abgekürzt SIM-Karte enthalten sind, wobei die SIM-Karte in einen Kartenleser der Endeinrichtung des globalen Mobilkommunikationssystems, abgekürzt GSM, eingeführt wird, daß eine Kartenidentifikationsnummer in die Endeinrichtung eingegeben wird, daß die Endeinrichtung mit dem GSM-Netzwerk verbunden wird, nachdem die von dem Benutzer angegebene Identifikationsnummer zugelassen wurde, daß ein Transaktions-Übertrager, der Diensteanbieter ausgewählt wird, daß ein Zahlungssystem des Übertragers, beispielsweise eines Mobiltelefonnetzwerk-Operators, angerufen wird, daß eine Verbindung mit dem Zahlungssystem des Übertragers hergestellt wird, daß ein zu zahlender Betrag angegeben wird, daß der Betrag bestätigt wird, daß eine Zahlung zugelassen wird, daß der Zahlung eine Identifikationsnummer zugeteilt wird, daß für den Benutzer eine Quittung über die Transaktion erstellt wird, daß die Transaktion in dem Endgerät des Diensteanbieters, beispielsweise eines Verkaufsgeschäfts, und in dem Zahlungssystem aufgezeichnet wird, daß die Gebühr für die Telefonverbindungszeit festgehalten wird, und daß die Verbindung getrennt wird.

8. Verfahren nach Anspruch 7,
**dadurch gekennzeichnet,** daß das Recht des Kartenbenutzers zur Benutzung in der Endeinrichtung des Diensteanbieters, beispielsweise in einem Rechner, geprüft wird, und daß bei positivem Prüfungsergebnis der von der Karte zu zahlende Betrag geprüft wird, und gegebenenfalls der Erhalt der Zahlung bestätigt wird.

9. Verfahren nach Anspruch 7 oder 8,
**dadurch gekennzeichnet,** daß eine A-Nummer, d.i. eine Teilnehmernummer eines anrufenden Teilnehmers, einer Kontonummer entspricht.

## Revendications

1. Procédé pour utiliser des services de télécommunication et exécuter des transactions financières au moyen d'un système de téléphone mobile incluant au moins un central téléphonique mobile pour le couplage de connexion dans, en provenance et en direction du système de téléphone mobile, procédé selon lequel une connexion audio et/ou une connexion de données est établie depuis un équipement terminal (1) de données du système de téléphone mobile en direction d'un prestataire de services désiré (13), et selon lequel avant la connexion au prestataire de services, un utilisateur du système est authentifié dans un centre d'authentification (5) du système de téléphone mobile, au moyen d'un code d'identité personnelle et de données provenant d'une partie d'informations d'une carte de service (2) contenue dans l'équipement terminal du système, caractérisé en ce qu'après l'authentification locale de l'utilisateur en vue de vérifier ses droits à utiliser le service du prestataire de services désiré (13), la connexion est établie depuis le central téléphonique mobile vers le prestataire de services par l'intermédiaire d'un réseau spécialisé (6).

2. Procédé selon la revendication 1, caractérisé en ce qu'on utilise comme système de téléphone mobile, un système de téléphone mobile du type système global pour communications mobiles, en abrégé GSM, ou un système correspondant comportant des terminaux mobiles commandés par une carte de service, et que la carte de service contient une unité de module d'identité d'abonné, en abrégé SIM, pour le réseau GSM, qui, lors d'applications d'authentification, a été initialisée pour la demande d'une entrée de l'identification d'un utilisateur au moyen d'un numéro d'identification personnelle, en abrégé PIN, de la carte de service.

3. Procédé selon la revendication 1 ou 2, caractérisé en ce que lors d'une opération bancaire, d'un paiement et d'autres applications requérant une grande sécurité des données, les connexions audio ou les connexions de données introduites dans le réseau GSM sont transmises depuis le central téléphonique mobile (4) au réseau spécialisé (6) pour empêcher une utilisation frauduleuse.

4. Procédé selon l'une quelconque des revendications précédentes, caractérisé en ce que dans lesdites connexions établies depuis le central téléphonique mobile (4) vers le service (13) par l'intermédiaire du réseau spécialisé (6), après ladite authentification locale de l'utilisateur, l'identité de numéro A de l'utilisateur, c'est-à-dire le numéro de l'abonné appelant, est utilisée pour vérifier les droits de l'utilisateur à utiliser ce service.

5. Procédé selon l'une quelconque des revendications précédentes, caractérisé en ce que, dans le central téléphonique mobile, un appel d'un numéro prédéterminé est transmis au réseau spécialisé (6) en fonction du registre contenu dans le central téléphonique mobile.

6. Procédé selon l'une quelconque des revendications précédentes, caractérisé en ce qu'une connexion est établie à partir d'un réseau privé, par l'intermédiaire d'un point de commutation de service et d'un point de contrôle de service, avec une pluralité de services d'utilisateurs, qui sont enregistrés par exemple dans une base de données de services gérée par un opérateur pour la mise en communication de l'utilisateur avec les services désirés.

7. Procédé de paiement au moyen d'un équipement terminal d'un central téléphonique mobile d'un réseau téléphonique mobile, ledit équipement terminal comportant une carte téléphonique/carte de paiement qui lui est raccordée et permet des appels d'un utilisateur, et des connexions avec le réseau téléphonique mobile étant prévues, connexions par l'intermédiaire desquelles il est possible d'accéder à des services d'un prestataire de services, caractérisé par la réservation de l'équipement sur la base de données d'utilisateur contenues dans une carte de module d'identité d'abonné, en abrégé SIM, par insertion de la carte SIM dans le lecteur de cartes de l'équipement terminal du système global pour communications mobiles, en abrégé GSM, l'introduction d'un numéro d'identification de carte dans l'équipement terminal, le raccordement de l'équipement terminal au réseau GSM après approbation du numéro d'identification donné par l'utilisateur, la sélection d'un émetteur de transaction, le prestataire de services, l'appel du système de paiement d'un émetteur, tel qu'un opérateur du réseau téléphonique mobile, l'établissement d'une connexion avec le système de paiement de l'émetteur, l'indication d'un montant à payer, la confirmation du montant, l'approbation d'un paiement, l'affectation d'un numéro d'identification au paiement, l'envoi d'un accusé de réception de la transaction à l'utilisateur, l'enregistrement de la transaction dans le terminal du prestataire de services, par exemple un vendeur, et dans le système de paiement, le chargement de la durée de la liaison téléphonique et l'interruption de la connexion.

8. Procédé selon la revendication 7, caractérisé par le contrôle du droit de l'utilisateur de la carte, à utiliser le terminal du prestataire de services, tel qu'un ordinateur, et la vérification, dans le cas d'une réponse affirmative, du montant à payer au moyen de la carte et, si cela est approprié, l'accusé de réception de la réception du paiement.

9. Procédé selon la revendication 7 ou 8, caractérisé en ce qu'une identité de numéro A, c'est-à-dire un numéro d'abonné appelant, correspond à un numéro de compte.
